## Europäisches Patentamt
## European Patent Office
## Office européen des brevets

(19)

(11) Numéro de publication: **0 052 569**
**B1**

(12)

# FASCICULE DE BREVET EUROPEEN

(45) Date de publication du fascicule du brevet:
**11.03.87**

(51) Int. Cl.⁴: **F 24 J 2/48**

(21) Numéro de dépôt: **81401813.1**

(22) Date de dépôt: **18.11.81**

(54) Produit en feuille à conduction thermique transversale unidirectionnelle et ses applications.

(30) Priorité: **19.11.80 FR 8024504**

(43) Date de publication de la demande:
**26.05.82 Bulletin 82/21**

(45) Mention de la délivrance du brevet:
**11.03.87 Bulletin 87/11**

(84) Etats contractants désignés:
**AT BE CH DE GB IT LI LU NL SE**

(56) Documents cités:
**EP - A - 0 017 415
DE - A - 2 840 021
FR - A - 2 266 753
FR - A - 2 328 167
GB - A - 2 054 004
US - A - 4 020 826
US - A - 4 055 707
US - A - 4 180 954**

(73) Titulaire: **Pedone, Angelo, Avenue d'Audenerde 85, Tournai (BE)**

(72) Inventeur: **Pedone, Angelo, Avenue d'Audenerde 85, Tournai (BE)**

(74) Mandataire: **Adorno, Silvano et al, c/o SOCIETA' ITALIANA BREVETTI S.p.A. Via Carducci, 8, I-20123 Milano (IT)**

**Description**

La présente invention concerne un produit en feuille à conduction thermique unidirectionnelle et ses applications, notamment au captage d'énergie et à l'isolation thermique.

On sait que la hausse continuelle du prix de l'énergie provenant du pétrole est l'une des causes principales de la crise économico-sociale bouleversant actuellement la plupart des pays. Il devient donc nécessaire de rechercher des moyens pour prélever l'énergie engendrée par des sources bon marché, telle que le soleil. L'énergie nous parvenant directement du soleil est relativement facile à piéger, mais malheureusement avec un faible rendement. De plus, cette énergie est la plupart du temps très diluée, sauf dans les pays à fort ensoleillement, et, le plus souvent, intermittente. En conséquence, il faut capter l'énergie solaire lorsqu'elle est disponible, avec un rendement élevé et à un coût raisonnable, afin qu'elle puisse devenir un substitut de l'énergie fournie à partir du pétrole. Les capteurs solaires actuellement connus sont incapables de remplir de telles conditions.

En effet, ces capteurs solaires connus sont constitués, pour l'essentiel, par une plaque métallique dirigée vers le rayonnement solaire incident et par un circuit métallique de circulation d'eau, en contact thermique étroit avec ladite plaque. Ainsi, le rayonnement solaire frappant ladite plaque engendre de la chaleur qui se répartit dans l'épaisseur de ladite plaque et se dirige vers ledit circuit de circulation, où elle est transmise à l'eau.

On remarquera donc que, dans ces capteurs solaires connus, l'énergie solaire doit, d'une part, parcourir un chemin qui peut être long entre son point d'incidence sur la plaque et le circuit de circulation d'eau et, d'autre part, transiter dans l'épaisseur de ladite plaque.

En effet, quoique déjà importante, l'épaisseur de la plaque n'est généralement pas suffisante pour laisser passer «sans résistance» l'énergie solaire captée, de sorte qu'une partie de l'énergie captée est réémise vers l'extérieur par ladite plaque. Cette résistance de transmission de la chaleur dans l'épaisseur de la plaque est aggravée par la longueur du parcours que doit effectuer la chaleur. Ainsi, pour améliorer ces capteurs solaires connus, on a prévu qu'ils comprennent une enveloppe directement délimitant une cavité pour la circulation d'un fluide de refroidissement (capteurs dit du genre «roll-bond») comme décrit dans FR-A-2 328 167, mais les coûts de fabrication sont extrêmement élevés, rendant ces capteurs économiquement peu intéressants.

On a cherché de remédier à ces inconvénients en permettant notamment le captage d'énergie solaire selon un principe totalement différent, qui permet également l'isolation thermique. Par exemple US-A-4 180 954 concerne un substrat de verre avec une face revêtue d'une pellicule absorbante l'énergie solaire, à son tour revêtue d'une pellicule réfléchissante.

Par DE-A-2 840 021 on connait une structure à bulles d'air, la paroi intérieure de laquelle est un produit en feuille à conduction thermique transversale unidirectionnelle, dont une face est susceptible d'absorber un rayonnement énergétique incident qui est transformé en énergie thermique, laquelle traverse complètement la faible épaisseur pour être irradiée vers l'extérieur du côté opposé à ladite face absorbante et la face opposée à cette face absorbante présente un état spéculaire réfléchissant permanent.

La présente invention a pour objet un produit en feuille de ce genre, mais avec une capacité absorbante améliorée sur le côté de captage des radiations et réfléchissante sur la face opposée sans qu'il soit nécessaire de prévoir des revêtements ou couches de matière différente, mais seulement grâce à un traitement spécial des surfaces.

Le produit selon l'invention est caractérisé en ce que la feuille métallique est en cuivre électrolytique avec une multiplicité de dentrites sur le côté de la face absorbante, formant entre elles un grand nombre de microcavités.

On a trouvé que lorsqu'un rayonnement énergétique frappe la face absorbante du produit en feuille selon l'invention, il se convertit en énergie thermique dans celui-ci et, à cause de sa très grande vitesse incidente, communique à la chaleur ainsi engendrée une vitesse de propagation parallèle à ladite vitesse incidente. Ainsi, l'énergie thermique continue son chemin à travers le produit en feuille, que du fait de la faible épaisseur de celui-ci, elle traverse complètement pour passer de l'autre côté. Grâce à la face spéculaire du produit en feuille, l'énergie thermique traversante ne peut retourner vers ladite feuille et est forcément irradiée dans la direction opposée à celle-ci.

Si le produit en feuille selon l'invention est interposé entre deux zones où règnent des rayonnements énergétiques différents, il peut donc produire les deux effets opposés différents:

– Lorsque la face absorbante du produit est dirigée vers la zone à rayonnement énergétique le plus important, le produit selon l'invention transforme celui-ci en énergie thermique, qu'il fait passer du côté de la zone à rayonnement énergétique le moins important.

De plus, il empêche le rayonnement énergétique et la chaleur se trouvant du côté de la face spéculaire de passer du côté de la face absorbante.

Le produit selon l'invention agit donc comme un piège à énergie thermique.

– Inversement, lorsque la face spéculaire du produit est dirigée vers la zone à rayonnement énergétique le plus important, le produit selon l'invention réfléchit celui-ci et interdit sa transformation en énergie thermique et son passage du côté de la zone à rayonnement énergétique le moins important.

Le produit en feuille selon l'invention présente donc une conduction thermique unidirectionnelle, que, par analogie, on peut comparer à la conduction électrique unidirectionnelle des diodes.

On remarquera de plus que cet effet de diode thermique procuré par le produit en feuille selon l'invention est renforcé, dans le premier cas mentionné ci-dessus, par le fait que le produit agit comme un transformateur de longueur d'ondes: en effet, l'énergie thermique irradiée du côté de la face spéculaire présente une longueur d'onde supérieure au rayonnement incident du côté de la face absorbante. Cette énergie thermique est donc plus facilement réfléchie par la face spéculaire du produit.

Ainsi, pour chauffer un fluide se trouvant du côté de la face spéculaire, le produit en feuille selon l'invention offre une «section» énormément plus grande que celle du dispositif connu rappelé ci-dessus, puisque constituée par la totalité de l'aire de la face absorbante, au lieu de l'épaisseur de la plaque. De plus, le trajet que doit parcourir l'énergie thermique, est beaucoup plus faible puisqu'elle peut être égale à quelques microns ou dizaines de microns, au lieu de plusieurs dizaines de mm.

Le produit selon l'invention permet donc de réaliser des capteurs solaires à très haut rendement.

Par ailleurs, le prix de revient du produit selon l'invention est peu élevé, puisque son épaisseur est très faible. Il permet donc de faire des capteurs solaires meilleur marché que les capteurs solaires connus qui nécessitent des plaques conductrices épaisses et des circuits échangeurs de chaleur.

On doit d'ailleurs remarquer que le produit en feuille selon l'invention peut être d'autant plus mince que sa conductibilité thermique est plus grande. Des essais satisfaisants ont été obtenus avec des feuilles de cuivre et d'aluminium dont l'épaisseur était au moins égale à 10 microns.

De façon connue, la face absorbante, constituée par une surface présentant une multiplicité de microcavités peut être recouverte d'un revêtement absorbant.

Cependant, il est avantageux qu'en plus de la surface irrégulière, éventuellement avec un revêtement absorbant, la face absorbante soit gaufrée. De préférence, le gaufrage de la face absorbante est réalisé de façon à entraîner celui de la face spéculaire. Dans ce cas, on préfère que le gaufrage, qui pourrait donner lieu à des motifs de forme quelconque, crée des gouffres concaves profonds sur la face absorbante et des bossages convexes sur la face spéculaire.

Les gouffres sont avantageusement les plus nombreux et les plus profonds possibles, de façon à absorber le maximum d'énergie incidente.

L'état spéculaire permanent de la face opposée à la face absorbante est avantageusement obtenu par un dépôt de nickel, de chrome, de nickel-chrome, etc.

Les figures du dessin annexé feront bien comprendre comment l'invention peut être réalisée.

La figure 1 illustre en coupe schématique et fortement agrandie un mode de réalisation du produit en feuille selon l'invention.

Les figures 2 et 3 illustrent schématiquement les modes de fonctionnement du produit en feuille selon l'invention.

Les figures 4 et 5 illustrent schématiquement des applications du produit en feuille selon l'invention.

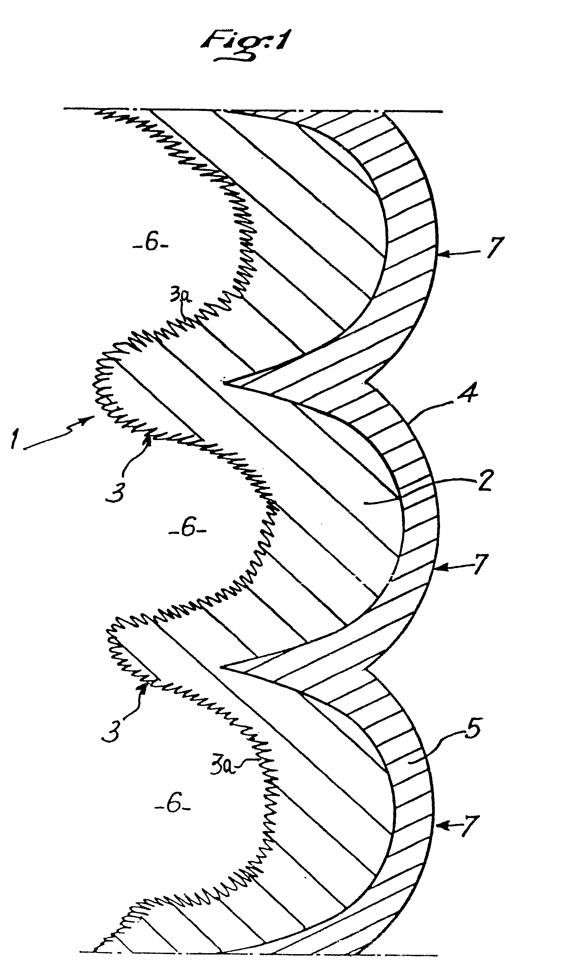

La portion de produit en feuille 1 selon l'invention, montrée en coupe schématique agrandie par la figure 1 et donnée à titre d'exemple non limitatif, comporte une feuille métallique 2 en cuivre électrolytique. Sur l'une de ses faces, la feuille de cuivre 2 comporte une multiplicité de microcavités 3a, telle qu'une forêt de dendrites, tandis que sa face opposée 4 est lisse. Les microcavités 3a peuvent être recouvertes par un revêtement, chimique, électro-chimique ou autre, noir ou gris, en vue de l'absorption optimale d'une énergie incidente. En revanche, la face 4 est revêtue d'une couche 5 d'un brillant spéculaire permanent.

De plus, la portion de feuille 1 est soumise à un gaufrage engendrant des gouffres concaves 6 du côté des microcavités 3a et des bossages arrondis convexes 7 du côté de la couche spéculaire 5. Un tel gaufrage est par exemple effectué après formation des microcavités 3a dans la feuille 2; en revanche, la couche spéculaire 5 peut être appliquée sur la face 4, avant ou après, ledit gaufrage.

Ce gaufrage a pour avantages, qui ressortiront de la suite, d'augmenter la surface de l'absorbeur et de multiplier naturellement et automatiquement les réflexions des photons incidents, et, donc, l'absorption d'énergie. Le gaufrage entraîne, de plus, une auto-orientation permanente pour une irradiation incidente de direction quelconque et une meilleure captation de l'énergie diffuse.

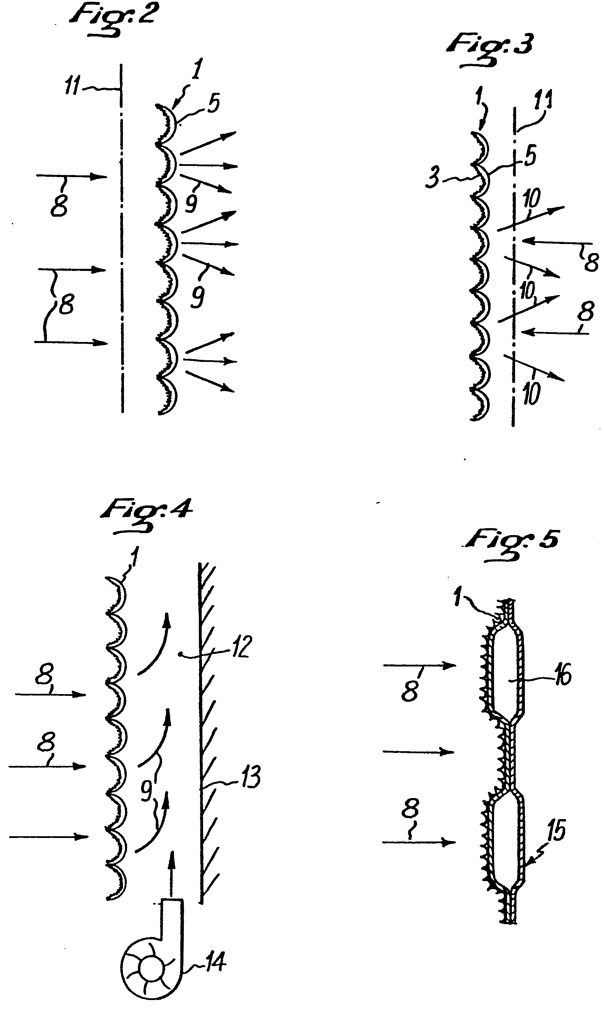

Si, comme le montre schématiquement la figure 2, la feuille 1 est disposée de façon que sa face absorbante 3, soit dirigée vers une source, par exemple le soleil, émettant un rayonnement symbolisé par les flèches 8, les photons constituant ce rayonnement sont absorbés dans les microcavités 3a et dans les gouffres 6. Ils cèdent leur énergie à la feuille de cuivre 2 qui la transforme en chaleur. Cette chaleur traverse l'épaisseur de la feuille 1 et est émise par les bossages 7, en direction opposée à ladite feuille 1 et du côté de celle-ci opposée au rayonnement incident 8. L'émission de chaleur, qui est symbolisée par les flèches 9, est favorisée par la forme arrondie des bossages 7, dont chacun d'eux se comporte comme une sphère émettrice.

Si, comme le montre schématiquement la figure 3, la feuille 1 est disposée de façon que sa face spéculaire 5 soit dirigée vers la source émettant le rayonnement symbolisé par les flèches 8, les photons constituant ce rayonnement sont réfléchis (selon les flèches 10), de sorte qu'aucune énergie thermique ne passe du côté des microcavités 3a. Le produit selon l'invention présente donc, selon sa disposition, des propriétés de génération ou d'isolation thermique.

Une des applications immédiates du produit conforme à la présente invention est, par exemple, la réalisation d'un store réversible 1 à disposer devant ou derrière une fenêtre schématisée par la ligne 11. Lorsqu'il fait froid, le store est disposé de la façon indiquée par la figure 2, de sorte que de la chaleur 9, provenant du rayonnement solaire 8, est engendrée du côté de la fenêtre 11, opposée à la source du rayonnement 8. En revanche, lorsqu'il fait chaud, le store est disposé de la façon indiquée par la figure 3, de sorte que le rayonnement 8, ne peut pénétrer du côté de la fenêtre 11, opposé à la source dudit rayonnement.

D'autres applications du même type peuvent être la réalisation de contre-fenêtres ou de revêtement de murs ou de toitures, de bâtiments, pas forcément réversibles, comme le store décrit ci-dessus.

Dans l'application à un revêtement de bâtiment, il est avantageux, comme le montre la figure 4, de ménager un canal 12, entre le revêtement 1 et la paroi 13 à recouvrir. Ainsi, grâce à un ventilateur 14, il est possible de faire circuler dans le canal 12, la chaleur qui y est engendrée par le revêtement 1, à partir du rayonnement 8. On remarquera que les bossages 7, donnant naissance à des turbulences dans le courant fluide engendrée par le ventilateur 14, forment des aspérités qui favorisent l'évacuation de la chaleur par ce courant fluide.

De nombreuses applications du produit selon l'invention sont possibles, conformément soit au schéma de la figure 2, soit à celui de la figure 3. On comprendra qu'il est impossible d'en donner une liste exhaustive; l'une de ces applications les plus importantes réside de la réalisation d'un capteur solaire selon le principe de la figure 2, pour chauffer soit un gaz, soit un liquide se trouvant du côté de la face spéculaire.

La figure 5 donne l'exemple d'une autre application selon laquelle sur un radiateur 15, par exemple du type constitué par des plaques de tôles assemblées délimitant entre elles un réseau de conduits 16, on fixe, par exemple à l'aide d'un moyen de fixation conducteur de la chaleur tel qu'une soudure à froid, le produit en feuille 1 selon l'invention. Si ce produit est fixé de façon que les microcavités 3a soient dirigées vers le rayonnement 8, la chaleur engendrée est susceptible de chauffer un fluide circulant dans les conduits 16 du radiateur 15.

**Revendications**

1. Produit en feuille métallique à condition thermique transversale unidirectionelle, dont une face (3) est susceptible d'absorber un rayonnement énergétique incident qui est transformé en énergie thermique, laquelle traverse complètement la faible épaisseur pour être irradiée vers l'extérieur du côté opposé à ladite face absorbante (3) et la face (4) opposée à cette face absorbante (3) présente un état spéculaire réfléchissant permanent, caractérisé en ce que la feuille métallique est en cuivre électrolytique avec une multiplicité de dendrites sur le côté de la face absorbante (3), formant entre elles un grand nombre de microcavités (3a).

2. Produit en feuille selon la revendication 1, caractérisé en ce que l'épaisseur de ladite feuille (1) est au plus égale à quelques dizaines de microns.

3. Produit en feuille selon la revendication 2, caractérisé en ce que ladite feuille (1) présente une épaisseur au moins égale à 10 microns.

4. Produit en feuille selon l'une quelconque des revendications 1 à 3, caractérisé en ce que ladite face absorbante (3) avec une multiplicité de microcavités (3a) comporte un revêtement absorbant.

5. Produit en feuille selon l'une des revendications 1 à 4, caractérisé en ce qu'au moins la face absorbante (3) est gaufrée.

6. Produit en feuille selon la revendication 5, caractérisé en ce que ladite feuille (1) est gaufrée de façon qu'apparaissent, du côté de la face absorbante (3), des gouffres concaves profonds (6) et, du côté de la face spéculaire (4), des bossages convexes (7).

7. Produit en feuille selon l'une quelconque des revendications 1 à 6, caractérisé en ce que l'état spéculaire permanent de la face (4) de la feuille opposée à la face absorbante (3) est obtenu par un dépôt de métal (5), tel que le nickel, le chrome ou le nickel-chrome.

8. Application du produit en feuille selon l'une quelconque des revendications 1 à 7, à la réalisation d'un dispositif permettant la génération d'énergie thermique à partir d'une source de rayonnement et/ou l'isolation thermique de ladite source.

9. Application du produit en feuille selon la revendication 8, caractérisée en ce que ledit dispositif est un store réversible (1) susceptible d'engendrer de l'énergie thermique d'origine solaire lorsqu'il fait froid et d'arrêter le rayonnement solaire lorsqu'il fait chaud.

10. Application du produit en feuille selon la revendication 8, caractérisée en ce que ledit dispositif est un revêtement (1) pour mur ou toiture d'un bâtiment, dans laquelle ledit produit en feuille est disposé de façon à ménager avec ledit mur ou ladite toiture (13) un canal (12) de circulation de fluide.

11. Application du produit en feuille selon la revendication 8, caractérisée en ce que ledit dispositif est un capteur solaire.

12. Application du produit en feuille selon l'une des revendications 8 ou 11, caractérisée en ce que ledit dispositif comporte un circuit de circulation de fluide (15), sur lequel est appliqué, en contact thermique étroit, le produit (1) selon l'une quelconque des revendications 1 à 7.

**Claims**

1. Metal sheet product with transversal monodirectional thermal conduction, a surface (3) of which is able to absorb an incident energetic radiation being transformed into thermal energy crossing totally the thin thickness so as to be externally irradiated from the side opposite to said absorbing surface (3), and the surface (4) opposite to said absorbing surface (3) has a permanent specular reflecting appearance, characterized in that the metal sheet is of electrolytic copper having a plurality of dendrites on the side of absorbing surface (3) forming among them a great number of microrecesses (3a).

2. The sheet product according to claim 1, characterized in that the thickness of said sheet (1) is at the most equal to some tens of microns.

3. The sheet product according to claim 2, characterized in that said sheet (1) has a thickness equal at least to 10 microns.

4. The sheet product according to any of claims 1 to 3, characterized in that said absorbing surface (3) with a plurality of microrecesses (3a) has an absorbing coating.

5. The sheet product according to any of claims 1 to 4, characterized in that at least the absorbing surface (3) is embossed.

6. The sheet product according to claim 5, characterized in that said sheet (1) is embossed in such a manner that on the side of absorbing surface (3) deep concave recesses (6) and on the side of specular surface (4) convex projections (7) appear.

7. The sheet product according to any one of claims 1 to 6, characterized by the fact that the permanent specular reflecting appearance of the surface (4) of the sheet, opposite to the absorbing surface (3), is obtained by a layer of metal (5) such as nickel, chrome or nichrome.

8. Application of the sheet product according to any one of claims 1 to 7, to obtain a device suitable to produce thermal energy from a radiation source and/or to cause thermal insulation of said source.

9. An application of the sheet product according to claim 8, characterized by the fact that said device is a reversible curtain (1) capable of producing thermal energy originating from the sun when it is cold and of stopping the solar radiation when it is warm.

10. An application of the sheet product according to claim 8, characterized by said device being a coating (1) for a wall or roof of a building, wherein said sheet product is located so as to form with said wall or roof (13) a fluid circulating channel (12).

11. An application of the sheet product according to claim 8, characterized by said device being a solar absorber.

12. An application of the sheet product according to either of claims 8 or 11, characterized by said device comprising a fluid circulation system (15) to which the product (1) of any one of claims 1 to 7 is applied in a tight thermal contact relationship.

**Patentansprüche**

1. Metallisches folienförmiges Erzeugnis mit einsinniger kreuzender Wärmeleitung, dessen eine Oberfläche (3) eine einfallende Energieausstrahlung aufzunehmen fähig ist, die in Wärmeenergie umgesetzt wird, welche die schwache Dicke durchfliesst, um nach Aussen aus der der genannten aufnehmenden Oberfläche (3) entgegengesetzten Seite ausgestrahlt zu werden, und die diesen aufnehmenden Oberfläche (3) entgegengesetzte Oberfläche (4) eine ständige reflektierende Spiegellage aufweist, dadurch gekennzeichnet, dass die metallische Folie aus elektrolytischem Kupfer ist, mit einer Vielzahl von Dendriten auf der Seite der aufnehmenden Oberfläche (3), die zwischen sich eine Vielzahl von Mikrovertiefungen (3a) bilden.

2. Folienförmiges Erzeugnis nach Anspruch 1, dadurch gekennzeichnet, dass die Dicke der genannten Folie (1) höchstens einiger Dutzenden Mikrons gleich ist.

3. Folienförmiges Erzeugnis nach Anspruch 2, dadurch gekennzeichnet, dass die genannte Folie (1) eine Dicke gleich mindestens 10 Mikrons aufweist.

4. Folienförmiges Erzeugnis nach einer der Ansprüchen 1–3, dadurch gekennzeichnet, dass die genannte aufnehmende Oberfläche (3) mit einer Vielzahl von Mikrovertiefungen (3a) einen aufnehmenden Überzug aufweist.

5. Folienförmiges Erzeugnis nach einer der Ansprüchen 1–4, dadurch gekennzeichnet, dass mindestens die aufnehmende Oberfläche (3) geprägt ist.

6. Folienförmiges Erzeugnis nach Anspruch 5, dadurch gekennzeichnet, dass die genannte Folie (1) so geprägt ist, dass auf der Seite der aufnehmenden Oberfläche (3) tiefe konkave Einbuchtungen und auf der Seite der Spiegelfläche (4) gewölbte Vorsprünge sichtbar werden.

7. Folienförmiges Erzeugnis nach einer der Ansprüchen 1–6, dadurch gekennzeichnet, dass die ständige Spiegellage der der aufnehmenden Oberfläche (3) entgegengesetzten Oberfläche (4) der Folie durch einen metallischen Ansatz (5), wie Nickel, Chrom oder Nickel-Chrom erhalten ist.

8. Anwendung des folienförmigen Erzeugnisses nach einer der Ansprüchen 1–7, zur Ausführung einer Vorrichtung, die die Wärmeenergieerzeugung aus einer Ausstrahlungsquelle und/oder die Wärmedämmung der genannten Quelle ermöglicht.

9. Anwendung des folienförmigen Erzeugnisses nach Anspruch 8, dadurch gekennzeichnet, dass die genannte Vorrichtung ein kippbarer Rollvorhang (1) ist, der sonnenherkommende Wärmeenergie zu erzeugen, wenn es kalt ist, und die Sonnendüsstrahlung aufzuhalten, wenn es warm ist, taugt.

10. Anwendung des folienförmigen Erzeugnisses nach Anspruch 8, dadurch gekennzeichnet, dass die genannte Vorrichtung eine Mauer- oder Dachverkleidung (1) eines Gebäudes ist, in der das genannte folienförmige Erzeugnis so angeordnet ist, dass es mit der genannten Mauer oder dem genannten Dach (13) einem Flüssigkeitsdurchflusskanal (12) bildet.

11. Anwendung des folienförmigen Erzeugnisses nach Anspruch 8, dadurch gekennzeichnet, dass die genannte Vorrichtung ein Sonnenempfänger ist.

12. Anwendung des folienförmigen Erzeugnisses nach einer der Ansprüchen 8 oder 11, dadurch gekennzeichnet, dass die genannte Vorrichtung einen Flüssigkeitsdurchflussumkreis (15) aufweist, auf dem das Erzeugnis (1) nach einer der Ansprüchen 1–7 in dichter thermischer Berührung angebracht ist.

## Fig.1

Fig. 2

Fig. 3

Fig. 4

Fig. 5